# FASCICULE DE BREVET EUROPEEN

(11) **EP 3 227 168 B1**
(45) Date de publication et mention de la délivrance du brevet: **02.01.2019**
(21) Numéro de dépôt: 15817935.8
(22) Date de dépôt: 16.11.2015
(51) Int. Cl.: B62D 25/06, B62D 65/06

(54) **AGENCEMENT POUR VÉHICULE AUTOMOBILE COMPRENANT UN ASSEMBLAGE MUNI D'UNE FEUILLURE CONFIGURÉE POUR SUPPORTER UN ÉLÉMENT DE TOIT**
ANORDNUNG FÜR EIN KRAFTFAHRZEUG MIT EINER BAUGRUPPE MIT EINEM ANSCHLAG ZUR STÜTZE EINES DACHELEMENTS
ARRANGEMENT FOR A MOTOR VEHICLE COMPRISING AN ASSEMBLY PROVIDED WITH A RABBET CONFIGURED TO SUPPORT A ROOF ELEMENT

(30) Priorité: 01.12.2014 FR 1461696
(43) Date de publication de la demande: 11.10.2017
(73) Titulaire: Renault s.a.s, 92100 Boulogne-Billancourt (FR)
(72) Inventeur: JEGARD, Loic, 78370 Plaisir (FR); JACQUES, Emmanuel, 78340 Les Clayes sous Bois (FR)
(86) Numéro de dépôt international: PCT/FR2015/053083
(87) Numéro de publication internationale: WO 2016/087737

(56) Documents cités:
- EP-A1- 1 712 419
- EP-A2- 2 559 609
- WO-A1-2012/095576
- DE-A1-102011 122 396
- DE-A1-102012 017 927
- GB-A- 2 491 017
- US-A1- 2009 230 733

## Description

### Domaine technique de l'invention

L'invention concerne un agencement pour véhicule automobile comprenant un assemblage comportant un côté de caisse, un renfort et une doublure assemblés entre eux.

L'invention a pour objet plus également un véhicule automobile comprenant au moins un tel agencement.

### État de la technique

Dans la fabrication d'un véhicule automobile, il est connu dans la zone du pavillon (ou toit) du véhicule d'assembler entre eux au moins un côté de caisse, un renfort de côté de caisse et une doublure de côté de caisse, ces éléments étant des pièces de tôlerie. Un tel assemblage est constitué de chaque côté latéral du véhicule et forme une partie de la structure (ou caisse) du véhicule.

Un tel agencement est connu du document DE102011122396. Le toit du véhicule est fixé à cet ensemble de pièces de chaque côté latéral du véhicule. Différents types de toit sont actuellement connus et commercialisés. Par exemple, il est connu de fixer un toit fixe en tôle par brasage et soudage. D'autres types de toit sont connus, tels que les toits ouvrants ou les toits en verre fixe.

La diversité de ces différents types de toits, pourtant nécessaires afin de disposer d'une offre répondant souvent aux exigences du client, est difficile à gérer dans la pratique.

La plupart du temps, il est nécessaire de modifier le côté de caisse et/ou le renfort et/ou la doublure pour les adapter structurellement à chaque type de toit. Il en résulte une très grosse difficulté de conception, de gestion, et des coûts élevés.

Ces problématiques sont encore renforcées par la nécessité fréquente de devoir en même temps gérer un besoin de fixer des barres de toit orientées longitudinalement le long de chaque côté latéral du toit, pour certains véhicules d'une gamme de véhicules.

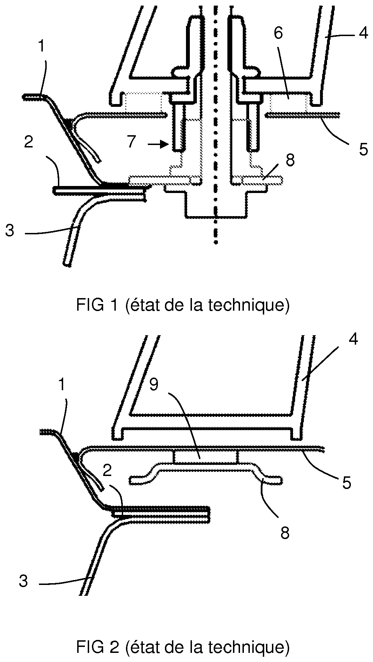

La problématique de trouver une solution tentant de limiter l'influence, pour les éléments de la caisse, du besoin de fixer ou non une barre longitudinale sur l'assemblage entre eux de ces éléments a déjà été traitée. Ainsi, en référence aux figures 1 et 2, il est déjà connu un agencement dans lequel un toit fixe comprenant un panneau de pavillon 5 en tôle fixe est fixé par soudo-brasage à un assemblage entre eux d'un côté de caisse 1, d'un renfort 2 et d'une doublure 3, le renfort 2 étant interposé entre un bord du côté de caisse 1 et un bord de la doublure 3. Une extension de feuillure 8 permet d'une part de servir d'interface à la barre de toit 4 et de zone de fixation, d'autre part de soutenir le panneau de pavillon 5 fixe entre ces interfaces. Un joint d'étanchéité 6 est interposé entre la barre de toit 4 et le panneau de pavillon 5 en tôle. Des éléments repérés 7 assurent la fixation de la barre de toit 4, en enserrant le panneau de pavillon 5 et l'extension de feuillure 8. L'extension de feuillure 8 est supportée par le panneau de pavillon 5 par l'intermédiaire d'un mastic de calage expansif 9, susceptible de se dilater durant une opération de cataphorèse, présent entre les zones d'interfaces. Cette solution permet de gérer la fixation ou non de la barre de toit 4 tout en conservant un environnement de base commun. En effet, le panneau de pavillon 5, le côté de caisse 1, le renfort 2 et la doublure 3 ne sont pas modifiés en fonction de la nécessiter ou non de fixer la barre de toit 4.

Toutefois, cette solution n'apporte aucune réponse à la problématique de devoir gérer la diversité des types de toit.

En parallèle, les solutions actuelles obligent tous à la présence d'une grande distance comptée suivant la direction latérale entre la barre de toit et le côté de caisse. Il en résulte donc une problématique de raideur et il existe concomitamment un besoin de devoir fournir une solution présentant une meilleure raideur d'accueil dans les besoins éventuels de la fixation d'une barre de toit.

### Objet de l'invention

Le but de la présente invention est de proposer un agencement pour véhicule automobile qui remédie aux inconvénients listés ci-dessus.

Notamment, un objet de l'invention est de fournir un tel agencement qui permette :
- de gérer efficacement la diversité des types de toit dans une même gamme de toit, par exemple adaptable facilement et à moindre coût entre un toit en tôle fixe, un toit ouvrant et un toit en verre fixe,
- d'améliorer la raideur d'accueil d'une éventuelle barre de toit lorsque le besoin de la fixation d'une telle barre de toit est éventuellement présent.

Ces objets peuvent être atteints grâce à un agencement pour véhicule automobile comprenant un assemblage comportant un côté de caisse, un renfort et une doublure assemblés entre eux, le renfort étant interposé entre le côté de caisse et la doublure, l'agencement comprenant un élément de toit d'un toit ouvrant ou d'un toit en verre fixe et au moins une extension de feuillure supportée par ledit assemblage et configurée de sorte à constituer un support pour ledit élément de toit.

L'extension de feuillure peut être une pièce distincte de chacune des pièces dudit assemblage.

L'agencement peut comprendre des éléments de fixation, notamment par soudure éventuellement précédé d'un pré-assemblage tel qu'un rivetage, de l'extension de feuillure avec ledit assemblage et des éléments d'étanchéité à l'eau et à l'air entre l'extension de feuillure et ledit assemblage.

L'agencement peut comprendre des éléments de fixation entre l'extension de feuillure et l'élément de toit supporté par l'extension de feuillure.

Le toit étant un toit ouvrant, l'extension de feuillure comporte un décrochement vers le bas en progressant transversalement vers l'intérieur du véhicule, formant une marche descendante supportant l'élément de toit supporté par l'extension de feuillure, ledit élément de toit étant notamment une cassette de toit destinée à supporter un panneau de pavillon amovible du toit.

Le toit étant un toit en verre fixe, l'extension de feuillure comporte un décrochement vers le haut en progressant transversalement vers l'intérieur du véhicule, formant une marche montante supportant l'élément de toit supporté par l'extension de feuillure, ledit élément de toit étant notamment un panneau de pavillon fixe en verre du toit.

L'agencement peut comprendre un enjoliveur latéral disposé latéralement entre le côté de caisse et un panneau de pavillon du toit.

L'extension de feuillure peut être configurée de sorte à constituer un support pour l'enjoliveur latéral.

L'agencement peut comprendre une barre de toit et l'extension de feuillure peut être constituée de sorte à former un support pour des organes de fixation de la barre de toit sur ledit assemblage.

Chaque organe de fixation peut être configuré de sorte à assurer un serrage de la barre de toit en direction de l'extension de feuillure.

La barre de toit peut être orientée selon une direction longitudinale du véhicule et comprend une embase d'appui contre l'enjoliveur latéral ou contre le panneau de pavillon de toit, ladite embase s'étendant continument sur toute la longueur de la barre de toit.

Un véhicule automobile pourra comprendre au moins un tel agencement.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- les figures 1 et 2, déjà décrites, représentent un agencement selon l'état de la technique, en coupe transversale,
- la figure 3 est une vue en coupe transversale d'un premier exemple d'agencement selon l'invention, avec un toit ouvrant et la mise en place d'une barre de toit,
- la figure 4 est une vue en coupe transversale d'un deuxième exemple d'agencement selon l'invention, avec un toit ouvrant mais sans barre de toit,
- la figure 5 est une vue en coupe transversale d'un troisième exemple d'agencement selon l'invention, avec un toit en verre fixe et la mise en place d'une barre de toit,
- la figure 6 est une vue en coupe transversale d'un quatrième exemple d'agencement selon l'invention, avec un toit en verre fixe et sans barre de toit,
- et la figure 7 est une variante de la figure 6.

### Description de modes préférentiels de l'invention

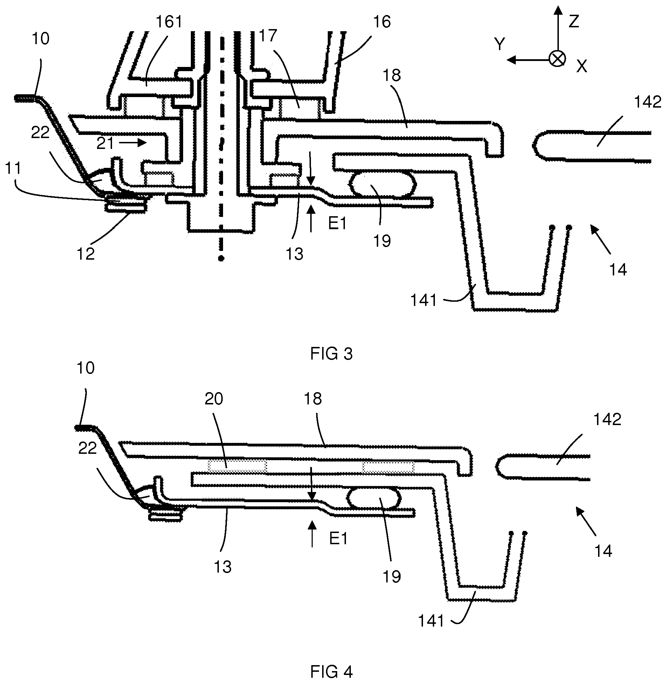

En référence maintenant aux figures 3 à 7, l'invention concerne de manière générale un agencement pour véhicule automobile comprenant un assemblage comportant lui-même un côté de caisse 10, un renfort 11 et une doublure 12 assemblés entre eux, notamment via une opération de soudage ou équivalent mécanique. L'assemblage est conformé de façon que le renfort 11 soit interposé par empilage entre un bord du côté de caisse 10 et un bord de la doublure 12, l'empilage étant orienté de façon sensiblement horizontal, en s'étendant suivant la direction longitudinale du véhicule sur la longueur du toit et suivant la direction transversale du véhicule sur une largeur de l'ordre de quelques millimètres (par exemple entre 5 et 20 mm).

L'invention porte aussi sur un véhicule automobile comprenant au moins un tel agencement.

Pour une meilleure compréhension, il est associé à l'agencement un repère orthogonal (figure 3), dans lequel X désigne la direction longitudinale avant-arrière du véhicule, orientée vers l'arrière, Y la direction latérale du véhicule, orientée vers la droite, et Z la direction verticale, orientée vers le haut. La figure 3 illustre de ce fait une section transversale d'un assemblage selon l'invention qui est situé du côté droit du véhicule, pour un observateur situé devant le véhicule et regardant vers l'arrière de celui-ci (suivant la direction longitudinale X).

Selon une caractéristique essentielle, l'agencement comprend un élément de toit d'un toit ouvrant 14 ou d'un toit en verre fixe 15 et au moins une extension de feuillure 13 supportée par l'assemblage et configurée de sorte à constituer un support pour cet élément de toit. L'extension de feuillure 13 comporte un bord latéral sensiblement horizontal du côté latéral du véhicule, qui est disposé en appui sur une face supérieure du bord du côté de caisse 10 évoqué ci-dessus.

Les premier et deuxième exemples respectivement illustrés sur les figures 3 et 4 correspondent au cas d'un toit ouvrant 14. Dans le cas particulier où le toit est un toit ouvrant 14, l'extension de feuillure 13 comporte un décrochement E1 vers le bas selon la direction Z en progressant vers l'intérieur du véhicule, formant une marche descendante supportant l'élément de toit supporté par l'extension de feuillure 13. L'élément de toit supporté par l'extension de feuillure 13 peut être notamment une cassette de toit 141 destinée à elle-même supporter un panneau de pavillon amovible 142 du toit. Une telle marche descendante a pour avantage de tenir compte de l'encombrement du toit ouvrant 14 compte tenu de l'empilement, selon la direction Z, de la cassette de toit 141 et du panneau de pavillon amovible 142.

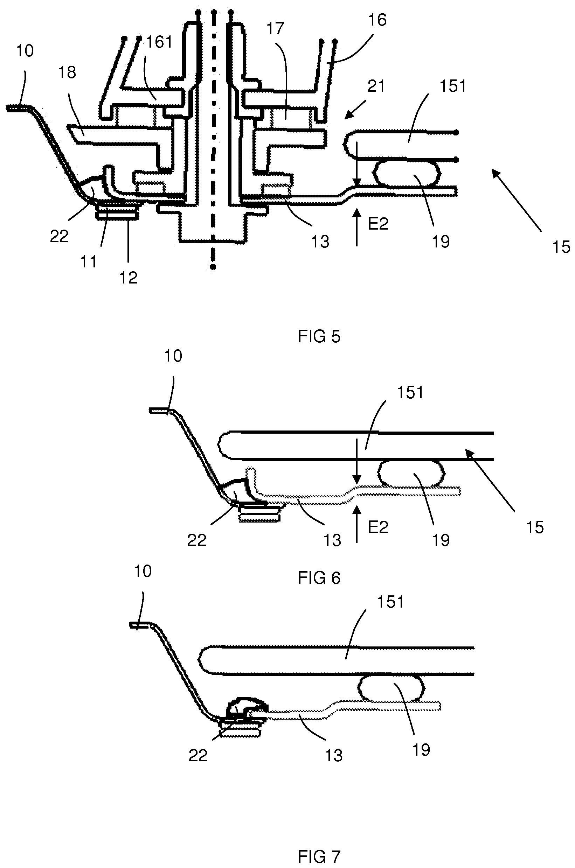

Les troisième et quatrième exemples respectivement illustrés sur les figures 5 et 6, de même que la variante de la figure 7, correspondent par contre au cas d'un toit en verre fixe 15. Dans le cas particulier où le toit est un toit en verre fixe 15, l'extension de feuillure 13 comporte un décrochement vers le haut E2 selon la direction Z en progressant vers l'intérieur du véhicule, formant une marche montante supportant l'élément de toit supporté par l'extension de feuillure 13. L'élément de toit supporté par l'extension de feuillure13 peut notamment être un panneau de pavillon fixe en verre 151 du toit.

Selon un mode de réalisation particulier, l'extension de feuillure 13 est une pièce distincte de chacune des pièces 10, 11, 12 dudit assemblage. Autrement dit, l'extension de feuillure 13 est alors une pièce distincte du côté de caisse 10, distincte du renfort 11 et distincte de la doublure 12.

L'agencement comprend également des éléments de fixation 22, notamment par soudure éventuellement précédé d'un pré-assemblage tel qu'un rivetage, de l'extension de feuillure 13 avec ledit assemblage et des éléments d'étanchéité à l'eau et à l'air entre l'extension de feuillure 13 et ledit assemblage. Les éléments d'étanchéité peuvent être confondus ou dissociés des éléments de fixation 22, suivant leurs natures respectives. Il peut s'agir d'un cordon de collage ou d'un mastic d'étanchéité.

Selon un mode de réalisation particulier, l'agencement comprend des éléments de fixation 19, notamment sous la forme d'un cordon de collage, entre l'extension de feuillure 13 et l'élément de toit supporté par l'extension de feuillure 13. En particulier, les éléments de fixation 19 peuvent assurer la fixation entre l'extension de feuillure 13 et soit le panneau de pavillon amovible 142 du toit ouvrant 14, soit le panneau de pavillon fixe en verre 151 du toit en verre fixe 15.

De préférence, l'agencement comprend un enjoliveur latéral 18 disposé latéralement entre le côté de caisse 10 et un panneau de pavillon du toit, selon la direction Y. Notamment, l'enjoliveur latéral 18 peut être disposé latéralement entre le côté de caisse 10 et soit le panneau de pavillon fixe en verre 151 dans le cas du toit en verre fixe 15 (figures 5 à 7), soit le panneau de pavillon amovible 142 dans le cas du toit ouvrant 14 (figures 3 et 4). Un tel enjoliveur latéral 18 peut éventuellement être prévu dans le cas de l'utilisation d'une barre de toit 16, ce qui est le cas sur les figures 3 et 5, ou même dans le cas d'un toit ouvrant 14 sans barre de toit 16 comme c'est le cas sur la figure 4.

De préférence, l'extension de feuillure 13 pourra alors être configurée de sorte à constituer un support pour l'enjoliveur latéral 18.

De manière facultative, en référence à la figure 4, des éléments d'étanchéité 20 peuvent être disposés entre l'extension de feuillure 13 et l'enjoliveur latéral 18.

L'agencement peut comprendre une barre de toit 16 et l'extension de feuillure 13 peut être constituée de sorte à former un support pour des organes de fixation 21 de la barre de toit 16 sur l'assemblage comprenant l'assemblage entre eux du côté de caisse 10, le renfort 11 et la doublure 12.

Dans le présent document, on appelle « barre de toit » chacune des barres dirigées suivant la direction longitudinale X sur les deux côtés latéraux du pavillon, à ne pas confondre avec des galeries ou des barres transversales orientées quant à elles selon la direction Y.

La nature de chaque organe de fixation 21 peut être quelconque dès lors qu'elle remplit sa fonction en présence de l'extension de feuillure 13. De préférence, il sera fait en sorte que chaque organe de fixation 21 soit configuré de manière à assurer un serrage de la barre de toit 16 en direction de l'extension de feuillure 13.

Comme il est indiqué précédemment, la barre de toit 16 est orientée selon la direction longitudinale X du véhicule et elle peut comprendre une embase d'appui 161 destinée à appuyer contre l'enjoliveur latéral 18 ou contre le panneau de pavillon de toit. Cette embase 161 s'étend de préférence continument sur toute la longueur de la barre de toit 16. Des éléments d'étanchéité 17 peuvent éventuellement être disposés entre l'embase d'appui 161 et l'enjoliveur latéral 18, comme cela est représenté sur les figures 3 et 5. Ce type de barre de toit est connu sous le nom de barre « flush » en terminologie anglo-saxonne. Les barres de toit « flush » équipent classiquement des véhicules de type break et participent fortement au style du véhicule.

Au contraire des versions des figures 3 à 6 qui prévoient que l'extension de feuillure 13 comprenne, sur son bord adjacent au côté de caisse 10, un bord relevé afin de maximiser la mise en oeuvre des éléments de fixation 22 et d'étanchéité et de diminuer l'encombrement latéral vu selon la direction Y, il reste toutefois possible, en référence à la figure 7, de prévoir que l'extension de feuillure 13 soit plate sur son bord adjacent au côté de caisse 10. Les éléments de fixation 22 seront adaptés en conséquence, suivant la conception du bord de la feuillure tournée vers l'assemblage des pièces 10, 11 et 12.

Le bord relevé sur l'extension de feuillure 13, que ce soit en version toit ouvrant 14 ou en version toit en verre fixe 15, permet une amélioration de la conception architecturale assurant un gain de la distance sur le chemin critique suivant la direction Y pour l'intégration des barres de toit 16 et donc de rapprocher les barres de toit 16 au plus près des cotés de caisse 10 pour une meilleur raideur de caisse et meilleur aspect esthétique. Il permet également à l'opérateur de guider la buse lors de l'opération d'application du mastic lorsque les éléments d'étanchéité comprennent un tel mastic.

L'assemblage décrit précédemment a pour avantages supplémentaires :
- de gérer efficacement la diversité des types de toit dans une même gamme de toit, adaptable facilement et à moindre coût entre un toit en tôle fixe, un toit ouvrant et un toit en verre fixe,
- d'améliorer la raideur d'accueil d'une barre de toit lorsque le besoin éventuel de la fixation d'une telle barre de toit 16 est présent.

L'extension de feuillure 13 peut notamment présenter les trois rôles généraux suivants :
- constituer une interface des barres de toits 16 longitudinales,
- constituer une interface du toit ouvrant 14 ou toit verre fixe 15,
- constituer une interface des éléments de fixation 22 et d'étanchéité par rapport au côté de caisse 10.

L'extension de feuillure 13 appliqué permet de gérer une nouvelle diversité entre le toit ouvrant 14 ou le toit en verre fixe 15 tout en conservant un environnement caisse commun, constitué par l'assemblage du coté de caisse 10, du renfort 11 et de la doublure 12.

## Revendications

1. Agencement pour véhicule automobile comprenant un assemblage comportant un côté de caisse (10), un renfort (11) et une doublure (12) assemblés entre eux, le renfort (11) étant interposé entre le côté de caisse (10) et la doublure (12), **caractérisé en ce que** l'agencement comprend un élément de toit d'un toit ouvrant (14) ou d'un toit en verre fixe (15) et au moins une extension de feuillure (13) supportée par ledit assemblage et configurée de sorte à constituer un support pour ledit élément de toit et des éléments de fixation (22), notamment par soudure éventuellement précédé d'un pré-assemblage tel qu'un rivetage, de l'extension de feuillure (13) avec ledit assemblage et des éléments d'étanchéité à l'eau et à l'air entre l'extension de feuillure (13) et ledit assemblage.

2. Agencement selon la revendication 1, **caractérisé en ce que** l'extension de feuillure (13) est une pièce distincte de chacune des pièces dudit assemblage.

3. Agencement selon la revendication 1 ou 2, **caractérisé en ce qu'**il comprend des éléments de fixation (19) entre l'extension de feuillure (13) et l'élément de toit supporté par l'extension de feuillure (13).

4. Agencement selon l'une quelconque des revendications 1 à 3, **caractérisé en ce que** le toit étant un toit ouvrant (14), l'extension de feuillure (13) comporte un décrochement (E1) vers le bas en progressant transversalement vers l'intérieur du véhicule, formant une marche descendante supportant l'élément de toit supporté par l'extension de feuillure (13), ledit élément de toit étant notamment une cassette de toit (141) destinée à supporter un panneau de pavillon amovible (142) du toit.

5. Agencement selon l'une quelconque des revendications 1 à 3, **caractérisé en ce que** le toit étant un toit en verre fixe (15), l'extension de feuillure (13) comporte un décrochement (E2) vers le haut en progressant transversalement vers l'intérieur du véhicule, formant une marche montante supportant l'élément de toit supporté par l'extension de feuillure (13), ledit élément de toit étant notamment un panneau de pavillon fixe en verre (151) du toit.

6. Agencement selon l'une quelconque des revendications 1 à 5, **caractérisé en ce qu'**il comprend un enjoliveur latéral (18) disposé latéralement entre le côté de caisse (10) et un panneau de pavillon du toit.

7. Agencement selon la revendication 6, **caractérisé en ce que** l'extension de feuillure (13) est configurée de sorte à constituer un support pour l'enjoliveur latéral (18).

8. Agencement selon l'une quelconque des revendications 1 à 7, **caractérisé en ce qu'**il comprend une barre de toit (16) et **en ce que** l'extension de feuillure (13) est constituée de sorte à former un support pour des organes de fixation (21) de la barre de toit (16) sur ledit assemblage.

9. Agencement selon la revendication 8, **caractérisé en ce que** chaque organe de fixation (21) est configuré de sorte à assurer un serrage de la barre de toit (16) en direction de l'extension de feuillure (13).

10. Agencement selon l'une des revendications 6 ou 7 et l'une des revendications 8 ou 9, **caractérisé en ce que** la barre de toit (16) est orientée selon une direction longitudinale (X) du véhicule et comprend une embase d'appui (161) contre l'enjoliveur latéral (18) ou contre le panneau de pavillon de toit, ladite embase (161) s'étendant continûment sur toute la longueur de la barre de toit (16).

11. Véhicule automobile comprenant au moins un agencement selon l'une quelconque des revendications précédentes.

## Patentansprüche

1. Anordnung für ein Kraftfahrzeug mit einer Baugruppe, umfassend ein Karosserieseitenteil (10), eine Verstärkung (11) und eine Auskleidung (12), die miteinander verbunden sind, wobei die Verstärkung (11) zwischen dem Karosserieseitenteil (10) und der Auskleidung (12) angeordnet ist, **dadurch gekennzeichnet, dass** die Anordnung ein Dachelement eines Schiebedaches (14) oder eines festen Glasdaches (15) und mindestens eine Falzerweiterung (13), die von der Anordnung getragen ist und derart ausgebildet ist, um eine Stütze für das Dachelement zu bilden, und Befestigungselemente (22), insbesondere durch Verschweißen, dem gegebenenfalls eine Vormontage wie eine Vernietung vorausgegangen ist, der Falzerweiterung (13) mit der Anordnung und wasser- und luftdichte Elemente zwischen der Falzerweiterung (13) und der Anordnung aufweist.

2. Anordnung nach Anspruch 1, **dadurch gekennzeichnet, dass** die Falzerweiterung (13) ein Bauteil ist, das von jedem der anderen Bauteile der Anordnung getrennt ist.

3. Anordnung nach Anspruch 1 oder 2, **dadurch gekennzeichnet, dass** es Befestigungselemente (19) zwischen der Falzerweiterung (13) und dem Dachelement aufweist, das von der Falzerweiterung (13) gestützt ist.

4. Anordnung nach einem der Ansprüche 1 bis 3, **dadurch gekennzeichnet, dass**, wenn das Dach ein Schiebedach (14) ist, die Falzerweiterung (13) einen Absatz (E1) nach unten aufweist, der quer in Richtung der Außenseite des Fahrzeugs strebt und dabei eine absteigende Stufe bildet, die das Dachelement stützt, das von der Falzerweiterung (13) gestützt ist, wobei das Dachelement insbesondere eine Dachkassette (141) ist, die dazu bestimmt ist, eine abnehmbare Himmelplatte (142) des Dachs zu stützten.

5. Anordnung nach einem der Ansprüche 1 bis 3, **dadurch gekennzeichnet, dass**, wenn das Dach ein festes Glasdach (15) ist, die Falzerweiterung (13) einen Absatz (E2) nach oben aufweist, der quer in Richtung der Innenseite des Fahrzeugs strebt und dabei eine aufsteigende Stufe bildet, die das Dachelement stützt, das von der Falzerweiterung (13) gestützt ist, wobei das Dachelement insbesondere eine feste Himmelplatte aus Glas (151) des Dachs ist.

6. Anordnung nach einem der Ansprüche 1 bis 5, **dadurch gekennzeichnet, dass** sie eine seitliche Zierleiste (18) aufweist, die seitlich zwischen dem Karosserieseitenteil (10) und einer Himmelplatte des Dachs angeordnet ist.

7. Anordnung nach Anspruch 6, **dadurch gekennzeichnet, dass** die Falzerweiterung (13) derart konfiguriert ist, um eine Stütze für die seitliche Zierleiste (18) zu bilden.

8. Anordnung nach Anspruch 1 bis 7, **dadurch gekennzeichnet, dass** sie einen Dachträger (16) aufweist und dadurch, dass die Falzerweiterung (13) derart ausgebildet ist, um eine Stütze für Befestigungsorgane (21) des Dachträgers (16) auf der Anordnung zu bilden.

9. Anordnung nach Anspruch 8, **dadurch gekennzeichnet, dass** jedes Befestigungsorgan (21) derart konfiguriert ist, um ein Klemmen des Dachträgers (16) in Richtung der Falzerweiterung (13) zu gewährleisten.

10. Anordnung nach einem der Ansprüche 6 oder 7 und einem der Ansprüche 8 oder 9, **dadurch gekennzeichnet, dass** der Dachträger (16) in einer Längsrichtung (X) des Fahrzeugs ausgerichtet ist und einen Anlagesockel (161) gegen die seitliche Zierleiste (18) oder gegen die Himmelplatte des Dachs aufweist, wobei sich der Sockel (161) kontinuierlich über die gesamte Länge des Dachträgers (16) erstreckt.

11. Kraftfahrzeug, umfassend mindestens eine Anordnung nach einem der vorhergehenden Ansprüche.

## Claims

1. Arrangement for a motor vehicle comprising an assembly including a body side (10), a strengthening member (11) and a lining (12) that are assembled together, the strengthening member (11) being interposed between the body side (10) and the lining (12), **characterized in that** Arrangement includes a roof element of a sun roof (14) or of a static glass roof (15) and at least one rabbet extension (13) supported by said assembly and designed to form a supporting member for said roof element and attachment elements (22) for attaching, notably by welding potentially preceded by a pre-assembly step such as riveting, the rabbet extension (13) and said assembly and watertight and airtight sealing elements between the rabbet extension (13) and said assembly.

2. Arrangement according to Claim 1, **characterized in that** the rabbet extension (13) is a separate component distinct from each of the components of said assembly.

3. Arrangement according to Claim 1 or 2, **characterized in that** it includes attachment elements (19) between the rabbet extension (13) and the roof element supported by the rabbet extension (13).

4. Arrangement according to any one of Claims 1 to 3, **characterized in that**, where the roof is a sun roof (14), the rabbet extension (13) includes a downward recess (E1) extending transversely towards the inside of the vehicle and forming a downward step supporting the roof element supported by the rabbet extension (13), said roof element being notably a roof unit (141) that is designed to support a removable panel (142) of the roof.

5. Arrangement according to any one of Claims 1 to 3, **characterized in that**, where the roof is a static glass roof (15), the rabbet extension (13) includes an upward recess (E2) extending transversely towards the inside of the vehicle and forming an upward step supporting the roof element supported by the rabbet extension (13), said roof element being notably a fixed glass panel (151) of the roof.

6. Arrangement according to any one of Claims 1 to 5, **characterized in that** it includes a lateral trim element (18) arranged laterally between the body side (10) and a panel of the roof.

7. Arrangement according to Claim 6, **characterized in that** the rabbet extension (13) is designed to form a support for the lateral trim element (18).

8. Arrangement according to any one of Claims 1 to 7, **characterized in that** it includes a roof bar (16) and **in that** the rabbet extension (13) is designed to form a support for the attachment members (21) for the roof bar (16) on said assembly.

9. Arrangement according to Claim 8, **characterized in that** each attachment member (21) is designed to clamp the roof bar (16) in the direction of the rabbet extension (13) .

10. Arrangement according to one of Claims 6 or 7 and one of Claims 8 or 9, **characterized in that** the roof bar (16) is oriented in a longitudinal direction (X) of the vehicle and includes a supporting base (161) bearing against the lateral trim element (18) or against the roof panel, said base (161) extending continuously over the length of the roof bar (16).

11. Motor vehicle including at least one arrangement according to any one of the preceding claims.
